(19) **Europäisches Patentamt**

**European Patent Office**

**Office européen des brevets**

(11) Veröffentlichungsnummer: **0 220 333**
**B1**

(12) # EUROPÄISCHE PATENTSCHRIFT

(45) Veröffentlichungstag der Patentschrift:
21.03.90

(51) Int. Cl.⁴: **C03C 10/14**

(21) Anmeldenummer: **85113664.8**

(22) Anmeldetag: **26.10.85**

(54) **Durchsichtige farbige Glaskeramik mit guter Temperaturbelastbarkeit und variabel einstellbarer Transmission im IR-Bereich.**

(43) Veröffentlichungstag der Anmeldung:
**06.05.87 Patentblatt 87/19**

(45) Bekanntmachung des Hinweises auf die Patenterteilung:
**21.03.90 Patentblatt 90/12**

(84) Benannte Vertragsstaaten:
**AT CH DE FR GB IT LI SE**

(56) Entgegenhaltungen:
**DE-B- 2 429 563**
**FR-A- 2 002 785**
**US-A- 4 285 728**

(73) Patentinhaber: **Schott Glaswerke,**
**Hattenbergstrasse 10, D-6500 Mainz(DE)**

(84) Benannte Vertragsstaaten: **CH DE FR IT LI SE AT**

(73) Patentinhaber: **CARL-ZEISS-STIFTUNG, Schott Glaswerke Hattenbergstrasse 10, D-6500 Mainz 1(DE)**

(84) Benannte Vertragsstaaten: **GB**

(72) Erfinder: **Pannhorst, Wolfgang, Dipl.-Phys., Jakob-Dieterich-Strasse 13, D-6500 Mainz(DE)**
Erfinder: **Rodek, Erich, Dipl.-Chem., Katzenberg 67, D-6500 Mainz(DE)**
Erfinder: **Scheidler, Herwig, Dipl.-Ing., Zeisigweg 5, D-6500 Mainz(DE)**

(74) Vertreter: **Görtz, Dr. Fuchs, Dr. Luderschmidt Patentanwälte,**
**Abraham-Lincoln-Strasse 7 Postfach 46 60, D-6200 Wiesbaden(DE)**

## Beschreibung

Die Erfindung bezieht sich auf eine Glaskeramik, die in der Aufsicht schwarz und in der Durchsicht violett oder braun bis dunkelrot erscheint, im IR-Bereich von 0,8-2,6 µm eine variabel einstellbare Transmission besitzt und zur Herstellung von beheizbaren Platten geeignet ist.

Im sichtbaren Wellenlängenbereich transparente Glaskeramiken, die als heizbare Platten Anwendung finden, sind bekannt und kommerziell erhältlich. Alle diese Platten basieren auf h-Quarz-Mischkristall-haltigen Glaskeramiken, die mittels färbender Oxide wie $TiO_2$, $MnO_2$, $Fe_2O_3$, NiO, CoO, $Cr_2O_3$, $V_2O_5$ und CuO eingefärbt sind; dabei ist $TiO_2$ wegen seiner keimbildenden Wirkung stets enthalten. Der Einfluß dieser färbenden Oxide auf die Farbgebung, d.h. auf die Absorption im sichtbaren Wellenlängenbereich, ist eingehend untersucht worden. So wird in der DE-AS 15 96 858 der Einfluß der einzelnen Oxide CoO, $Cr_2O_3$, NiO und $Fe_2O_3$ sowie von CoO im Kombination mit $MnO_2$ und CuO auf die Transmission im sichtbaren Wellenlängenbereich beschrieben.

In der US-PS 3 788 865 wird die Wirkung von Kombinationen von jeweils zwei der Oxide CoO, NiO, $Fe_2O_3$, $Cr_2O_3$, $MnO_2$ und CuO auf die Transmission im Wellenlängenbereich von 400-700 nm untersucht; darüber hinaus wird die gleichzeitige Wirkung der drei Oxide NiO, CoO und $Fe_2O_3$ sowie diejenige von $V_2O_5$ auf die Transmission beschrieben; für die $V_2O_5$-haltige Glaskeramik wird ohne Angabe von Meßergebnissen auf deren gute Transparenz im IR-Bereich hingewiesen.

In der DE-PS 24 29 563 wird die gemeinsame Wirkung der vier Oxide CoO, NiO, $Fe_2O_3$ und $MnO_2$ auf die Transmission beschrieben; dabei wird im Wellenlängenbereich von 700 - 800 nm eine Transmission von über 70% beobachtet, die maßgebend für den Farbton in Durchsicht ist, während die IR-Transmission zum Teil auf unter 10% absinkt.

In der US-PS 4 211 820 wird eine braune Glaskeramik beschrieben, bei der die Einfärbung neben $TiO_2$ durch $V_2O_5$ erzielt wird; daneben ist als färbendes Oxid nur noch $Fe_2O_3$ in geringen Mengen enthalten. Die Charakterisierung der Transmission ist unzureichend, und es kann nur vermutet werden, daß die Braunfärbung durch Messungen der Transmission an 5 mm dicken Proben bei $\lambda$ = 800 nm charakterisiert werden soll. Angaben über die Transmission im IR-Bereich liegen nicht vor.

Die US-PS 4 285 728 schließlich beschreibt durchsichtige, farbige Glaskeramiken, die zur Herstellung von beheizbaren Platten geeignet sind. Die Einfärbung wird dabei durch entsprechende Gehalte an Farboxiden NiO, CoO, $Fe_2O_3$, $V_2O_5$ verwirklicht. Diese Glaskeramiken enthalten jedoch β-Eukryphit und/oder β-Spodumen-Mischkristalle als überwiegende Kristallphase.

Wie aus dem genannten Stand der Technik hervorgeht, ist der Einfluß von färbenden Oxiden auf die Transmission im sichtbaren Bereich der h-Quarz-Mischkristall-haltigen Glaskeramiken eingehend untersucht worden, auch wenn die Dokumentation der Ergebnisse teilweise sehr knapp ist. Danach ist es also möglich, heizbare Platten mit folgenden Eigenschaften herzustellen: ca. 4 mm dicke Platten erscheinen in Aufsicht undurchsichtig (schwarz), während sie in Durchsicht violett, braun bis dunkelrot erscheinen; bei der Verwendung als Kochfläche oder bei ähnlichen Anwendungen führt dies dazu, daß während des Betriebes die Heizelemente gut zu erkennen sind, während sie im unbenutzten Zustand durch die Kochfläche abgedeckt werden.

Im Gegensatz zur Transmission im sichtbaren Wellenlängenbereich ist der Einfluß der färbenden Oxide auf die Transmission im IR-Bereich nur sehr mangelhaft untersucht. Von den kommerziell erhältlichen Glaskeramik-Kochflächen der Firma Corning, Corning Code 9632, ist bekannt, daß die mit $V_2O_5$ eingefärbten Glaskeramiken im IR-Bereich von 1-2,6 µm eine sehr hohe Transmission besitzen, nämlich von ca. 80% für 4 mm dicke Proben; umgekehrt haben die von der Firma Schott vertriebenen Glaskeramik-Kochflächen mit der Bezeichnung CERAN, die mit einer Kombination der Oxide CoO, NiO, $MnO_2$ und $Fe_2O_3$ eingefärbt sind, eine sehr geringe IR-Transmission, die für 4 mm dicke Proben bei $\lambda$ = 1,6 µm unter 10 % liegt.

Betrachtet man insbesondere beheizbare Platten in ihrer Anwendung als Kochfläche, so erkennt man, daß nicht allein die IR-Transmission die bestimmende Größe für eine gute Leistungsfähigkeit des Kochsystems, d.h. für kurze Ankochzeiten und geringen Energieverbrauch ist. Bereits in der DE-PS 24 37 026 ist gezeigt worden, daß Heizkörper (mit Temperaturbegrenzer), Kochfläche und Kochgeschirr gemeinsam als Einheit betrachtet werden müssen.

Bei gegebenem Heizkörper und gegebener Kochfläche ist bestimmend für den Wärmefluß von der Heizquelle zum Kochgut die Qualität des Topfbodens, d.h. dessen Absorptions-/Reflexionseigenschaften, dessen Planität und dessen Bewegung senkrecht zur Heizquelle während des Kochvorgangs. Je weniger der Topf die angebotene Heizenergie aufnimmt (und umgekehrt), umso mehr wird die Energie zum Heizkörper zurückgesandt, bis der auf eine bestimmte Soll-Temperatur einjustierte Temperaturbegrenzer abschaltet.

Je nach Transmissionseigenschaft der Kochfläche wird ein unterschiedlich hoher Anteil an Heizenergie vom Heizleiter durch die Kochfläche zum Topfboden durch Strahlung übertragen. Zusätzlich erfolgt die Beheizung des Topfbodens durch Wärmeleitung und Sekundärstrahlung der sich erhitzenden Kochfläche. Außerdem findet bei reflektierenden Topfböden ein umgekehrter Energietransport in Abhängigkeit von der Transmission der Kochfläche statt.

Sowohl in der DE-PS 24 37 026 als auch in der Schott-Information 2/84 wurde nachgewiesen, daß eine Optimierung des Kochsystems, insbesondere wegen der unterschiedlichen Topfqualitäten, sehr schwierig ist und nicht allein durch Änderung der IR-Durchlässigkeit der Kochfläche möglich ist. So kann z.B. eine zu hohe IR-Durchlässigkeit, je nach Strahlungsintensität des Heizkörpers, durchaus schädlich sein, wenn hierdurch die Topfbodenbewegung negativ beeinflußt wird oder zu viel der vom Topf nicht aufgenommenen Heizenergie durch die Kochfläche zurückreflektiert wird und hierdurch noch während der Ankochdauer der Temperaturbegrenzer zu häufig schaltet.

Um die Leistungsfähigkeit des Gesamtsystems Heizkörper - Kochfläche - Topf weitgehend vom Teilsystem Topf zu entkoppeln, war daher in der DE-PS 24 37 026 vorgeschlagen worden, die Glaskeramikplatte auf der Oberseite mit einer strahlungsabsorbierenden Emailschicht zu versehen. Neben dieser Maßnahme besteht natürlich die Möglichkeit, die optimale Absorption der Wärmestrahlung durch Farboxide gezielt einzustellen. Dies hat den Vorteil, daß Emails dann allein zu dekorativen Zwecken verwendet werden können und ihre Wahl sehr viel freier erfolgen kann.

Die Entwicklung von Heizkörpern für Glaskeramik ist heute keineswegs als abgeschlossen zu betrachten. In der Zukunft ist durchaus mit Heizsystemen zu rechnen, die gegenüber den derzeitigen Heizkörpern für Kochflächen eine unterschiedliche Strahlungscharakteristik aufweisen und/oder die aus mehreren Heizbereichen mit unterschiedlicher Strahlertemperatur bzw. -charakteristik aufgebaut sind.

Diese, heute noch nicht umfassend vorhandenen Beheizungssysteme sollten bei der Entwicklung einer optimierten Kochfläche mit berücksichtigt werden. Darüber hinaus ist es vorteilhaft, die zuvor beschriebene Einstellbarkeit der Strahlungsdurchlässig keit im sichtbaren und IR-Bereich für - aus z.B. Fertigungsgründen erforderliche - unterschiedliche Dicken der beheizbaren Platten vornehmen zu können.

Aufgrund der vorhergehenden Diskussion ergeben sich folgende Zielvorstellungen für die Optimierung von h-Quarz-Mischkristall-haltigen Glaskeramiken in der Anwendung als beheizbare Platten:

1. Im sichtbaren Bereich soll die Absorption gerade so eingestellt werden, daß bei eingeschalteten Heizelementen, auch bei niedriger Leistung, einerseits die Heizelemente sichtbar sind, andererseits die Augen nicht geblendet und vor allem vor schädlichen Strahlungen geschützt werden, und daß bei abgeschalteten Heizelementen diese durch die in Aufsicht schwarz wirkende Platte verdeckt werden.

2. Im IR-Bereich soll die Transmission durch unterschiedliche Gehalte an Farboxiden variabel so einstellbar sein, daß mit den jeweils unterschiedlichen Heizkörpern eine Optimierung des Gesamtsystems Heizkörper - Kochfläche - Topf möglich wird.

Um die Variabilität der Transmission im IR-Bereich zu erreichen, müssen die bisher verwendeten Kombinationen der färbenden Oxide erweitert werden, da ansonsten die starke Absorption im sichtbaren Bereich bis ca. 600 nm und die variable Absorption im IR-Bereich nicht gleichzeitig erreicht werden können. Von den beiden färbenden Oxiden, die in h-Quarz-Mischkristall-haltigen Glaskeramiken bis ca. 600 nm stark absorbieren und ab ca. 1000 nm sehr gut transparent sind, kann das $Cr_2O_3$ nur in sehr geringen Mengen verwendet werden, da es die obere Entglasungstemperatur stark ansteigen läßt und die zugehörigen Gläser nicht verarbeitet werden können.

Zur Lösung der gestellten Aufgabe bleiben nur Kombinationen von $V_2O_5$ mit anderen färbenden Oxiden übrig; dabei könnten Zusammensetzungen, die nur $V_2O_5$ enthalten, für Anwendungen mit hoher IR-Transmission verwendet werden, während Zusammensetzungen mit geringerer IR-Transmission durch Zusatz weiterer Farboxide wie NiO, CoO und $Fe_2O_3$ eingestellt werden könnten.

Es ergeben sich jedoch zwei Schwierigkeiten. Das Vanadium bildet mehrere Oxide verschiedener Wertigkeiten, wobei Übergänge von einem Oxidationszustand in einen anderen bereits durch leichte Verschiebung des Reduktions-Oxidations-Gleichgewichts erfolgen. Bei der Kombination von $V_2O_5$ mit anderen polyvalenten Kationen ist daher bereits bei kleinen Änderungen im Reduktions-Oxidations-Gleichgewicht mit einem Wertigkeitswechsel des Vanadiums und damit mit einer Farbänderung zu rechnen. Untersuchungen mit $V_2O_5$-haltigen Glaskeramiken zeigen außerdem, daß $V_2O_5$ einen negativen Einfluß auf die Stabilität der h-Quarz-Mischkristalle ausübt. So wird zum Beispiel in der US-PS 4 211 820 darauf hingewiesen, daß $V_2O_5$ die Umwandlung der h-Quarz-Mischkristall-Phase in die Keatit-Mischkristall-Phase (auch h-Spodumen-Mischkristall genannt) zu beschleunigen scheint, ohne daß dies als negativ empfunden wurde. In der Arbeit von Pannhorst und Wichelhaus (Glastechn. Ber. 56K (1983) Bd. 1, S. 572-577) wird ebenfalls gezeigt, daß $V_2O_5$ ebenso wie die Kombination der Farboxide von NiO, CoO und $Fe_2O_3$ die Umwandlung im Vergleich zur nicht eingefärbten Glaskeramik beschleunigt.

Mit der Umwandlung von h-Quarz-Mischkristall in Keatit-Mischkristall ist ein Anstieg in den thermischen Ausdehnungskoeffizienten sowie eine Änderung der Farbe verbunden. Da Änderungen im thermischen Ausdehnungskoeffizienten und in der Farbe während des Gebrauchs nur in sehr engen Grenzen zugelassen werden dürfen, bedeutet das frühere Einsetzen der Umwandlung der h-Quarz-Mischkristall-haltigen Glaskeramik in Keatit-Mischkristall-haltige Glaskeramik für die $V_2O_5$-haltigen Zusammensetzungen, daß bei diesen die Anwendung als Kochfläche beeinträchtigt werden kann. Ein weiteres Ziel der vorliegenden Erfindung ist daher

3. eine h-Quarz-Mischkristall-haltige Glaskeramik, die eine ausreichende Stabilität gegenüber Temperatur/Zeit-Belastungen besitzt, wie sie bei der Anwendung als Kochfläche auch unter Extrembedingungen auftreten.

Die Stabilität gegenüber der oben erwähnten Umwandlung läßt sich auf verschiedene Art und Weise spezifizieren; in der DE-PS 2 429 563 wurde ein bestimmtes Keramisierungsprogramm mehrfach durchlaufen, und es wurde die Variation des linearen thermischen Ausdehnungskoeffizienten zwischen 20°C und 700°C, $\alpha_{20/700}$, in Abhängigkeit von der Zahl der Umwandlungszyklen bestimmt. Ein anderes Kriterium ist in der Schott Information 2/84 angegeben; danach sollte die Glaskeramik einer Temperatur-Zeit-Behandlung bei 825°C über 35 h ohne nennenswerte Eigenschaftsveränderungen widerstehen.

Es konnte nun überraschenderweise ein Zusammensetzungsgebiet gefunden werden, in dem eine variable Einfärbung durch Kombination der Oxide $V_2O_5$, $NiO$, $CoO$, $MnO_2$, $Fe_2O_3$ und $Cr_2O_3$ möglich ist. Die erfindungsgemäßen Zusammensetzungen liegen in dem Bereich:

| | |
|---|---|
| $SiO_2$ | 62–68 |
| $Al_2O_3$ | 19,5–22,5 |
| $Li_2O$ | 3,0–4,0 |
| $Na_2O$ | 0–1,0 |
| $K_2O$ | 0–1,0 |
| $BaO$ | 1,5–3,5 |
| $CaO$ | 0–1,0 |
| $MgO$ | 0–0,5 |
| $ZnO$ | 0,5–2,5 |
| $TiO_2$ | 1,5–5,0 |
| $ZrO_2$ | 0–3,0 |
| $MnO_2$ | 0–0,40 |
| $Fe_2O_3$ | 0–0,20 |
| $CoO$ | 0–0,30 |
| $NiO$ | 0–0,30 |
| $V_2O_5$ | 0–0,80 |
| $Cr_2O_3$ | 0–0,20 |
| $F$ | 0–0,20 |
| $Sb_2O_3$ | 0–2,0 |
| $As_2O_3$ | 0–2,0 |
| $\Sigma Na_2O+K_2O$ | 0,5–1,5 |
| $\Sigma BaO+CaO$ | 1,5–4,0 |
| $\Sigma TiO_2+ZrO_2$ | 3,5–5,5 |
| $\Sigma Sb_2O_3+As_2O_3$ | 0,5–2,5 |

Die Angaben des Zusammensetzungsbereiches beziehen sich auf die analytische Zusammensetzung der Glaskeramik-Ausgangsgläser. Die Angaben sollen jedoch nichts darüber aussagen, in welcher Wertigkeitsstufe diese Oxide in den Glaskeramikausgangsgläsern bzw. in den Glaskeramiken vorliegen.

Die Glaskeramik wird durch eine Wärmebehandlung zwischen 680°C und 920°C aus dem Ausgangsglas umgewandelt.

Für einige Ausführungsbeispiele sind in Tabelle 1 und 2 Zusammensetzungen der Glaskeramikausgangsgläser und einige Eigenschaften der zugehörigen Glaskeramiken zusammengestellt. Die Ausgangsgläser wurden unter Verwendung von in der Glasindustrie üblichen Rohstoffen durch Einschmelzen bei 1620°C in 1/2-l-Quarzgut-Tiegeln, Läuterung bei 1620°C über 2 h, Homogenisierung bei ca. 1550°C über 3 h in Pt-Tiegeln erschmolzen; anschließend wurden Gußstücke von ca. 120 × 80 × 20 mm gegossen und, beginnend ab ca. 660°C, in einem Kühlofen auf Raumtemperatur abgekühlt. Zur Untersuchung der glaskeramischen Eigenschaften wurden Proben mit 4°C/min auf 720°C aufgeheizt, bei 720°C eine Stunde gehalten, anschließend mit 2°C/min auf 880°C aufgeheizt, bei 880°C 90 Min gehalten und schließlich durch Ausschalten des Ofens auf Raumtemperatur abgekühlt.

Die niedrigen thermischen Ausdehnungskoeffizienten der Beispiele zeigen, daß alle Zusammensetzungen so gewählt wurden, daß sie bezüglich der Temperaturwechselbeständigkeit als beheizbare Platten bzw. Kochflächen verwendet werden können. Die Zusammensetzungen der Beispiele 1 und 2 fallen aus dem Zusammensetzungsbereich der vorliegenden Erfindung heraus, während die Beispiele 3 bis 8 die Erfindung erläutern.

Das Beispiel 1 fällt in das Zusammensetzungsgebiet der DE-PS 24 29 563 und entspricht einer Glaskeramik, die kommerziell zur Verwendung als Kochfläche vertrieben wird. Bei Verwendung üblicher Strahlungsheizkörper hat sich diese Glaskeramik bewährt, jedoch sollte im Rahmen der Entwicklung von leistungsstärkeren Heizelementen die Langzeitstabilität dieser Glaskeramik verbessert werden; dies geht aus den Veränderungen im linearen thermischen Ausdehnungskoeffizienten, $\alpha_{20/700}$, und in der Transmission der vier Umwandlungszyklen mit dem weiter oben beschriebenen Keramisierungsprogramm bzw. durch nachträgliche Temperung bei 825°C über 35 h hervor.

Beispiel 2 entspricht ebenfalls einer kommerziell vertriebenen Glaskeramik; eigene Versuche haben gezeigt, daß diese Glaskeramik erhebliche Probleme bezüglich der Farbkonstanz und der Konstanz der linearen thermischen Ausdehnungskoeffizienten bei Langzeitbelastungen aufweist. Dies wird durch die Ergebnisse in Tabelle 2 bestätigt; sowohl nach vier Umwandlungszyklen als auch nach der Temperung bei 825°C über 35 h haben sich der $\alpha_{20/700}$-Wert und die Transmission erheblich verändert.

Demgegenüber zeigen die Beispiele 3 bis 8 nach vier Umwandlungszyklen bzw. nach der Zusatztemperung eine gute Konstanz im linearen thermischen Ausdehnungskoeffizienten und gleichzeitig eine geringere Veränderung in der Transmission. Darüber hinaus zeigen diese Beispiele, daß die Transmission bei $\lambda = 1600$ nm variabel einstellbar ist; so nimmt die IR-Transmission in der Reihenfolge der Beispiele ständig zu, von 7 % für Beispiel 3 auf 80 % für Beispiel 8.

| Temperatur/ Zeit-Belastung | Eigenschaft | 1 | 2 | 3 | 4 | 5 | 6 | 7 | 8 |
|---|---|---|---|---|---|---|---|---|---|
| 1 Umwandlungszyklus | $\alpha_{20/700} \cdot 10^{-7}$/K | 0,5 | 4,7 | −1,3 | −1,2 | −1,0 | −2,7 | −2,0 | −2,3 |
| | $\tau_{700}$ (%) 4 mm Dicke | 44 | 21 | 53 | 40 | 21 | 35 | 33 | 27 |
| | $\tau_{1600}$ (%) 4 mm Dicke | 8 | 80 | 7 | 21 | 37 | 40 | 50 | 80 |
| | Kristall-Gehalt* | hQMK | hQMK | hQMK | hQMK | hQMK | hQMK | hQMK | hQMK |
| 4 Umwandlungszyklen | $\alpha_{20/700} \cdot 10^{-7}$/K | 8,0 | 8,8 | −0,4 | −1,0 | 0,1 | −2,0 | −1,5 | −0,5 |
| | $\tau_{700}$ (%) 4 mm Dicke | 20 | 9 | 45 | 27 | 10 | 24 | 22 | 14 |
| | $\tau_{1600}$ (%) 4 mm Dicke | 8 | 70 | 7 | 21 | 37 | 40 | 50 | 77 |
| | Kristall-Gehalt* | hQMK KMK | KMK | hQMK | hQMK | hQMK | hQMK | hQMK | hQMK |
| 1 Umwandlungszyklus + 35 h 825°C | $\alpha_{20/700} \cdot 10^{-7}$/K | 2,4 | 11,3 | −1,1 | −0,8 | 0,0 | −2,1 | −1,3 | −0,7 |
| | $\tau_{700}$ (%) 4 mm Dicke | 25 | 9 | 45 | 26 | 10 | 22 | 21 | 12 |
| | $\tau_{1600}$ (%) 4 mm Dicke | 8 | 75 | 7 | 21 | 37 | 40 | 50 | 75 |
| | Kristall-Gehalt* | hQMK KMK | KMK | hQMK | hQMK | hQMK | hQMK | hQMK | hQMK |

\* hQMK = h-Quarz-Mischkristall
KMK = Keatit-Mischkristall

| | 1 | 2 | 3 | 4 | 5 | 6 | 7 | 8 |
|---|---|---|---|---|---|---|---|---|
| $SiO_2$ | 64,00 | 67,80 | 64,50 | 65,20 | 65,40 | 64,90 | 65,30 | 65,00 |
| $Al_2O_3$ | 21,30 | 20,10 | 21,40 | 21,20 | 21,10 | 21,80 | 21,20 | 21,40 |
| $Li_2O$ | 3,50 | 3,35 | 3,60 | 3,70 | 3,50 | 3,50 | 3,70 | 3,60 |
| $Na_2O$ | 0,60 | 0,30 | 0,60 | 0,60 | 0,80 | 0,75 | 0,60 | 0,70 |
| $K_2O$ | 0,50 | 0,20 | 0,15 | 0,20 | 0,25 | 0,05 | 0,20 | 0,25 |
| BaO | 2,50 | − | 2,30 | 2,30 | 2,35 | 2,40 | 2,30 | 2,35 |
| MgO | − | 1,58 | − | − | − | − | − | − |
| ZnO | 1,50 | 1,30 | 1,20 | 1,50 | 1,30 | 1,20 | 1,45 | 1,30 |
| $TiO_2$ | 2,30 | 4,90 | 2,30 | 2,30 | 2,25 | 2,40 | 2,30 | 2,20 |
| $ZrO_2$ | 1,60 | − | 1,60 | 1,45 | 1,58 | 1,60 | 1,45 | 1,60 |
| $MnO_2$ | 0,65 | − | 0,17 | 0,15 | 0,08 | 0,08 | 0,03 | − |
| $Fe_2O_3$ | 0,23 | 0,03 | 0,18 | 0,09 | 0,04 | 0,06 | 0,05 | 0,03 |
| CoO | 0,37 | − | 0,23 | 0,12 | 0,07 | 0,07 | 0,05 | − |
| NiO | 0,06 | − | 0,29 | 0,15 | 0,10 | 0,09 | 0,04 | − |
| $V_2O_5$ | − | 0,10 | − | 0,15 | 0,45 | 0,25 | 0,30 | 0,40 |
| $Sb_2O_3$ | 0,85 | − | 1,50 | 1,00 | 1,00 | 1,10 | 1,00 | 1,20 |
| $As_2O_3$ | − | 0,36 | − | − | − | − | − | − |

## Patentansprüche

1. Durchsichtige farbige, Hoch-Quarz-Mischkristalle enthaltende Glaskeramik, die in der Aufsicht schwarz und in der Durchsicht violett oder braun bis dunkelrot erscheint, insbesondere zur Herstellung von beheizbaren Platten, dadurch gekennzeichnet, daß die durch Temperaturbelastungen bedingte Änderung des linearen thermischen Ausdehnungskoeffizienten und der Transmission gering ist, daß die Transmission im IR-Bereich zwischen 800 nm und 2,6 µm variabel eingestellt werden kann, daß sie folgende Zusammensetzung (in Gew.-%) besitzt:

| | |
|---|---|
| $SiO_2$ | 62–68 |
| $Al_2O_3$ | 19,5–22,5 |
| $Li_2O$ | 3,0–4,0 |
| $Na_2O$ | 0–1,0 |
| $K_2O$ | 0–1,0 |
| BaO | 1,5–3,5 |
| CaO | 0–1,0 |
| MgO | 0–0,5 |
| ZnO | 0,5–2,5 |
| $TiO_2$ | 1,5–5,0 |
| $ZrO_2$ | 0–3,0 |
| $MnO_2$ | 0–0,40 |
| $Fe_2O_3$ | 0–0,20 |
| CoO | 0–0,30 |
| NiO | 0–0,30 |
| $V_2O_5$ | 0–0,80 |
| $Cr_2O_3$ | 0–0,20 |
| F | 0–0,20 |
| $Sb_2O_3$ | 0–2,0 |
| $As_2O_3$ | 0–2,0 |
| $\Sigma Na_2O+K_2O$ | 0,5–1,5 |
| $\Sigma BaO+CaO$ | 1,5–4,0 |
| $\Sigma TiO_2+ZrO_2$ | 3,5–5,5 |
| $\Sigma Sb_2O_3+As_2O_3$ | 0,5–2,5 |

wobei die Färbung durch Kombination von Oxiden aus der Gruppe $V_2O_5$, NiO, CoO, $MnO_2$, $Fe_2O_3$ und $Cr_2O_3$ ermöglicht wird, und daß sie durch eine Wärmebehandlung zwischen 680°C und 920°C aus diesem Glaskeramikausgangsglas umgewandelt worden ist.

2. Glaskeramik nach Anspruch 1, gekennzeichnet durch folgende Zusammensetzung (in Gew.-%):

| | |
|---|---|
| $SiO_2$ | 64–66 |
| $Al_2O_3$ | 21–22 |
| $Li_2O$ | 3,4–3,8 |
| $Na_2O$ | 0,6–0,8 |
| $K_2O$ | 0–0,3 |
| BaO | 2,0–2,8 |
| CaO | 0,0–0,2 |
| MgO | 0,0–0,2 |
| ZnO | 1,0–1,6 |
| $TiO_2$ | 2,0–2,8 |
| $ZrO_2$ | 1,0–1,8 |
| $MnO_2$ | 0–0,15 |
| $Fe_2O_3$ | 0–0,15 |
| CoO | 0–0,30 |
| NiO | 0–0,30 |
| $V_2O_5$ | 0–0,60 |
| $Sb_2O_3$ | 0,8–1,6 |
| $As_2O_3$ | 0,8–1,6 |
| $\Sigma Na_2O+K_2O$ | 0,7–1,1 |
| $\Sigma BaO+CaO$ | 2,0–3,0 |
| $\Sigma TiO_2+ZrO_2$ | 3,5–5,5 |

**Claims**

1. A transparent, coloured glass-ceramic, containing high temperature quarz solid solution, which appears black in reflection and violet or brown to dark red in transmission, especially for the manufacture of heatable plates, characterized in that
a change of the linear thermal expansion co-efficient and of the transmission, due to temperature stresses, is small,
that the transmission in the IR region between 800 nm and 2,6 μm can be variably adjusted,
that the glass-ceramic comprises the following composition (in weight percent):

| | |
|---|---|
| $SiO_2$ | 62–68 |
| $Al_2O_3$ | 19,5–22,5 |
| $Li_2O$ | 3,0–4,0 |
| $Na_2O$ | 0–1,0 |
| $K_2O$ | 0–1,0 |
| $BaO$ | 1,5–3,5 |
| $CaO$ | 0–1,0 |
| $MgO$ | 0–0,5 |
| $ZnO$ | 0,5–2,5 |
| $TiO_2$ | 1,5–5,0 |
| $ZrO_2$ | 0–3,0 |
| $MnO_2$ | 0–0,40 |
| $Fe_2O_3$ | 0–0,20 |
| $CoO$ | 0–0,30 |
| $NiO$ | 0–0,30 |
| $V_2O_5$ | 0–0,80 |
| $Cr_2O_3$ | 0–0,20 |
| $F$ | 0–0,20 |
| $Sb_2O_3$ | 0–2,0 |
| $As_2O_3$ | 0–2,0 |
| $\Sigma Na_2O+K_2O$ | 0,5–1,5 |
| $\Sigma BaO+CaO$ | 1,5–4,0 |
| $\Sigma TiO_2+ZrO_2$ | 3,5–5,5 |
| $\Sigma Sb_2O_3+As_2O_3$ | 0,5–2,5 |

wherein the coloring is enabled by combination of oxides from the group of $V_2O_5$, $NiO$, $CoO$, $MnO_2$, $Fe_2O_3$ and $Cr_2O_3$, and
that the glass-ceramic was transformed from this glass-ceramic starting glass by heat treatment between 680°C and 920°C.

2. Glass-ceramic according to claim 1, comprising the following composition (in weight percent):

| | |
|---|---|
| SiO$_2$ | 64–66 |
| Al$_2$O$_3$ | 21–22 |
| Li$_2$O | 3,4–3,8 |
| Na$_2$O | 0,6–0,8 |
| K$_2$O | 0–0,3 |
| BaO | 2,0–2,8 |
| CaO | 0,0–0,2 |
| MgO | 0,0–0,2 |
| ZnO | 1,0–1,6 |
| TiO$_2$ | 2,0–2,8 |
| ZrO$_2$ | 1,0–1,8 |
| MnO$_2$ | 0–0,15 |
| Fe$_2$O$_3$ | 0–0,15 |
| CoO | 0–0,30 |
| NiO | 0–0,30 |
| V$_2$O$_5$ | 0–0,60 |
| Sb$_2$O$_3$ | 0,8–1,6 |
| As$_2$O$_3$ | 0,8–1,6 |
| ΣNa$_2$O+K$_2$O | 0,7–1,1 |
| ΣBaO+CaO | 2,0–3,0 |
| ΣTiO$_2$+ZrO$_2$ | 3,5–5,5 |

## Revendications

1. Vitro-céramique colorée, transparente, contenant une solution de quartz solide à haute température, ayant un aspect noir en réflection, et violet ou de brun à rouge sombre en transmission, en particulier pour la fabrication de plaques chauffantes, caractérisé en ce que
    – la modification du coefficient de dilatation thermique linéaire, et de la transmission, en conséquence de chocs thermiques, demeure faible,
    – la transmission dans la bande IR entre 800 nm et 2,6 μm peut être adaptée de manière variable,
    – la vitro-céramique a la composition suivante (en pourcentage pondéral):

| | |
|---|---|
| SiO$_2$ | 62–68 |
| Al$_2$O$_3$ | 19,5–22,5 |
| Li$_2$O | 3,0–4,0 |
| Na$_2$O | 0–1,0 |
| K$_2$O | 0–1,0 |
| BaO | 1,5–3,5 |
| CaO | 0–1,0 |
| MgO | 0–0,5 |
| ZnO | 0,5–2,5 |
| TiO$_2$ | 1,5–5,0 |
| ZrO$_2$ | 0–3,0 |
| MnO$_2$ | 0–0,40 |
| Fe$_2$O$_3$ | 0–0,20 |
| CoO | 0–0,30 |
| NiO | 0–0,30 |
| V$_2$O$_5$ | 0–0,80 |
| Cr$_2$O$_3$ | 0–0,20 |
| F | 0–0,20 |
| Sb$_2$O$_3$ | 0–2,0 |
| As$_2$O$_3$ | 0–2,0 |
| ΣNa$_2$O+K$_2$O | 0,5–1,5 |
| ΣBaO+CaO | 1,5–4,0 |
| ΣTiO$_2$+ZrO$_2$ | 3,5–5,5 |
| ΣSb$_2$O$_3$+As$_2$O$_3$ | 0,5–2,5 |

8

dans laquelle la coloration est obtenue par la combinaison des oxydes appartenant au groupe $V_2O_5$, NiO, CoO, $MnO_2$, $Fe_2O_3$ et $Cr_2O_3$ et
– la vitro-céramique a été transformée à partir de son état initial par traitement thermique entre 680°C et 920°C.

2. Vitro-céramique selon la revendication 1, ayant la composition suivante (en pourcentage pondéral):

| | |
|---|---|
| $SiO_2$ | 64–66 |
| $Al_2O_3$ | 21–22 |
| $Li_2O$ | 3,4–3,8 |
| $Na_2O$ | 0,6–0,8 |
| $K_2O$ | 0–0,3 |
| BaO | 2,0–2,8 |
| CaO | 0,0–0,2 |
| MgO | 0,0–0,2 |
| ZnO | 1,0–1,6 |
| $TiO_2$ | 2,0–2,8 |
| $ZrO_2$ | 1,0–1,8 |
| $MnO_2$ | 0–0,15 |
| $Fe_2O_3$ | 0–0,15 |
| CoO | 0–0,30 |
| NiO | 0–0,30 |
| $V_2O_5$ | 0–0,60 |
| $Sb_2O_3$ | 0,8–1,6 |
| $As_2O_3$ | 0,8–1,6 |
| $\Sigma Na_2O+K_2O$ | 0,7–1,1 |
| $\Sigma BaO+CaO$ | 2,0–3,0 |
| $\Sigma TiO_2+ZrO_2$ | 3,5–5,5 |